# EUROPÄISCHE PATENTSCHRIFT

(11) **EP 0 824 855 B1**
(45) Veröffentlichungstag und Bekanntmachung des Hinweises auf die Patenterteilung: **04.04.2001**
(21) Anmeldenummer: 97112020.9
(22) Anmeldetag: 15.07.1997
(51) Int. Cl.: A01D 34/82

(54) **Rasenmäher mit Zusatzgerät**
Lawnmower with supplementary tool
Tondeuse à gazon à outil additionnel

(30) Priorität: 22.08.1996 DE 19633935
(43) Veröffentlichungstag der Anmeldung: 25.02.1998
(73) Patentinhaber: Wolf-Garten GmbH & Co. KG, 57518 Betzdorf (DE)
(72) Erfinder: Spies, Walther, Dr., 57080 Siegen (DE); Held, Peter, 57584 Scheuerfeld (DE)
(74) Vertreter: Koch, Günther, Dipl.-Ing.

(56) Entgegenhaltungen:
- EP-A- 0 034 359
- DE-A- 3 120 426
- DE-A- 3 812 105
- DE-A- 4 330 567
- US-A- 2 984 961
- US-A- 3 945 176
- US-A- 4 870 811
- US-A- 5 269 127
- US-A- 5 375 399

## Beschreibung

Die Erfindung bezieht sich auf einen Rasenmäher der im Oberbegriff des Patentanspruchs 1 angegebenen Gattung.

Derartige Rasenmäher mit Zusatzgerät sind in der Erkenntnis entwickelt worden, daß die in Verbindung mit den Rasenmähern zur Rasenpflege erforderlichen Geräte, wie Vertikutierer, in der Anschaffung relativ teuer sind, weil diese Geräte nicht nur mit einem Antriebsmotor, sondern auch mit einem Fahrgestell mit Führungsgriff ausgebildet sein müssen. Da derartige Vertikutierer oder Lüftungsgeräte im Gegensatz zum Rasenmäher nur relativ selten benutzt werden, sind solche Einzelgeräte unwirtschaftlich in der Anschaffung, und sie benötigen während der längeren Zeit des Nichtgebrauchs einen überdachten Stellplatz.

Durch die DE-43 30 567 ist ein Rasenmäher bekannt, der außer dem Mähwerk in einem gemeinsamen Gehäuse mit diesem, aber in einem gesonderten Gehäuseraum, ein Vertikutierwerkzeug aufweist, das vom Antriebsmotor des Mähwerkzeuges über ein Getriebe auskuppelbar angetrieben wird. Dieses Kombinationsgerät ermöglicht zwar das gleichzeitige Vertikutieren und Rasenmähen in einem Arbeitsvorgang, jedoch wird dieses Vertikutiergerät in der Regel erst nach zahlreichen Mähvorgängen ohne Vertikutiervorgang zugeschaltet. Dies bedeutet, daß in der Mehrzahl der Arbeitsvorgänge eine nicht unerheblich große Last bewegt werden muß. Außerdem ist ein entsprechend leistungsfähig ausgebildeter Motor erforderlich, und es ist eine relativ komplizierte Getriebeübersetzung nach dem Vertikutiergerät notwendig.

Außer diesem kombinierten Bodenbearbeitungsgerät sind Rasenmäher bekannt, bei denen ein Zusatzgerät anbaubar ist. Die deutsche Gebrauchsmusterschrift 78 23 247 offenbart ein Vertikutiergerät, welches als Austauschgerät anstelle der Messer eines vorhandenen Rasenmähers einbaubar ist.

Die deutsche Gebrauchsmusterschrift 81 12 178 zeigt eine Zusatzeinrichtung für Rasenmäher zum Vertikutieren und Gartenhacken, welches unter dem Gehäuse des Rasenmähers montiert ist. Um das Zusatzgerät anzubringen, muß das Messer abgeschraubt und an dessen Stelle ein Winkelgetriebe auf die Welle aufgeschoben werden. Das Winkelgetriebe besitzt einen Flansch, der mit den Befestigungsschrauben des Motors festgelegt wird.

Dieses Zusatzgerät erfordert eine aufwendige Montage und Demontage beim Umbau von Rasenmäher auf Vertikutiergerät und umgekehrt, wobei die Montage für den Laien problematisch sein kann und im umgebauten Zustand die Sicherheit des Gerätes nicht immer gewährleistet ist.

Durch die DE 36 09 338 A1 ist ein Gerät für einen Vertikutiervorgang zum Antrieb durch einen motorbetriebenen Rasenmäher mit senkrechter Welle für das Mähmesser bekannt, das zum Anbau an die Messerwelle des Rasenmähers ausgebildet ist. Dieses Anbaugerät ist konstruktiv aufwendig ausgebildet und erfordert eine sachkundige, zeitaufwendige Montage, so daß das Gerät im allgemeinen im montierten Zustand am Rasenmäher belassen wird und beim Rasenmähen ständig ein hohes Zusatzgewicht mitbewegt werden muß.

Durch die DE 31 20 426 A1 ist ein gattungsgemäßer Rasenmäher bekannt, bei dem das Zusatzgerät im Bedarfsfalle am Rasenmäherchassis anbaubar ist. Zu diesem Zweck sind Verstärkungsschienen vorgesehen, die lösbar mit dem Mähergehäuse verbunden sind und/oder unter Anpassung an das Gehäuse und unter Verstärkung des Gehäuses profiliert oder in ein Gußgehäuse integriert sind. Der Antrieb erfolgt von der Messerwelle aus über ein Abzweiggetriebe und einen freiliegenden Keilriemenantrieb. Um das Anbaugerät funktionsfähig zu machen, ist es erforderlich, den Rasenmäher mit einem, üblicherweise nicht vorhandenen, Abzweiggetriebe auszurüsten. Die Montage des Zusatzgerätes ist relativ kompliziert und schwierig im Hinblick auf die Einstellung der Keilriemenspannung.

Der Erfindung liegt die Aufgabe zugrunde, einen gattungsgemäß aufgebauten Rasenmäher zu schaffen, bei dem das Zusatzgerät mit nur wenigen Handgriffen sicher und zuverlässig mit dem Rasenmäher kombinierbar ist, keine zusätzlichen Mäherumbauten erfordert und zugleich oder unabhängig vom Mähwerk in Betrieb gesetzt werden kann.

Gelöst wird die gestellte Aufgabe durch die im Kennzeichnungsteil des Patentanspruchs 1 angegebenen Merkmale. Durch die erfindungsgemäße Steckverbindung wird ein Formschluß in seitlicher Richtung erreicht, während die Abstützung über die Stützfläche erfolgt, so daß keinerlei Justiermittel erforderlich sind, um das Zusatzgerät oder seine Antriebsvorrichtung justieren zu müssen. Leidglich eine Verriegelung des Zusatzgerätes gegen ein unbeabsichtigtes Ausheben ist erforderlich. Dies kann auf einfachste Weise durch einen verschlußriegel erfolgen.

Gemäß einer bevorzugten Ausführung der Erfindung ist das Zusatzgerät für Rasenmäher vorgesehen, die im vorderen Chassisabschnitt mit einer Grifföffnung ausgestattet sind, über die das Chassis zum Zwecke der Höhenverstellung erfaßt werden kann oder mit der das Chassis an einer Aufhängevorrichtung an einer Wand aufhängbar ist. Für die Steckverbindung ist demgemäß keine Abänderung des Rasenmähers erforderlich. Der Einsteckzapfen des Zusatzgerätes ist hohl ausgebildet und im Querschnitt der Grifföffnungsform angepaßt. Der hohl ausgebildete Steckzapfen kann entsprechend der Form der Grifföffnung auch konisch ausgebildet sein, und beim Einsetzen ergibt sich demgemäß ein seitlich unverrückbarer Sitz.

Die Erfindung ist jedoch auch bei Rasenmähern anwendbar, die keine der Grifföffnung entsprechende Ausnehmung aufweisen, in die der Zapfen eingesteckt werden kann. In diesen Falle kann der Rasenmäher fabrikatorisch oder nachträglich mit Einstecklöchern oder Einsteckhülsen ausgestattet werden, in die entsprechend ausgebildete Steckzapfen des Zusatzgerätes eingreifen.

Dadurch, daß der Antriebsmotor mit dem Gehäuse des Zusatzgerätes vereinigt ist, entfallen die sonst erforderlichen Getriebeverbindungen zwischen Messerwelle und Antriebswelle des Zusatzgerätes.

Das Zusatzgerät kann fabrikatorisch fest in das Rasenmäherchassis eingebaut werden. Das zusätzliche Gewicht ist relativ gering, so daß das Zusatzgerät immer mitgeführt werden kann. Vorzugsweise ist das Zusatzgerät jedoch lösbar mit dem Rasenmäherchassis verbunden, so daß es nach Gebrauch und bis zur Wiederverwendung abgenommen und raumsparend gestapelt werden kann.

Bei festem Einbau ist es zweckmäßig, das Zusatzgerät gegenüber dem Rasenmäherchassis um eine horizontale Achse derart schwenkbar zu gestalten, daß bei Nichtgebrauch das Zusatzgerät über das Chassisgehäuse verschwenkt werden kann, wodurch sich der Grundriß auf die Größe des Mähers ohne Vorsatzgerät reduziert.

Ausgestaltungen der Erfindung ergeben sich aus den Unteransprüchen.

Nachstehend werden Ausfuhrungsbeispiele der Erfindung anhand der Zeichnung beschrieben. In der Zeichnung zeigen:
Fig. 1 zeigt einen Vertikalteilschnitt des vorderen Chassisteils eines herkömmlichen Rasenmähers;
Fig. 2 zeigt eine Grundrißansicht zu Fig. 1;
Fig. 3 zeigt eine der Fig. 1 entsprechende Ansicht mit eingestecktem Zusatzgerätgehäuse;
Fig. 4 zeigt als Einzelteil das im Schnitt gezeichnete Zusatzgerät mit Befestigungsklammer;

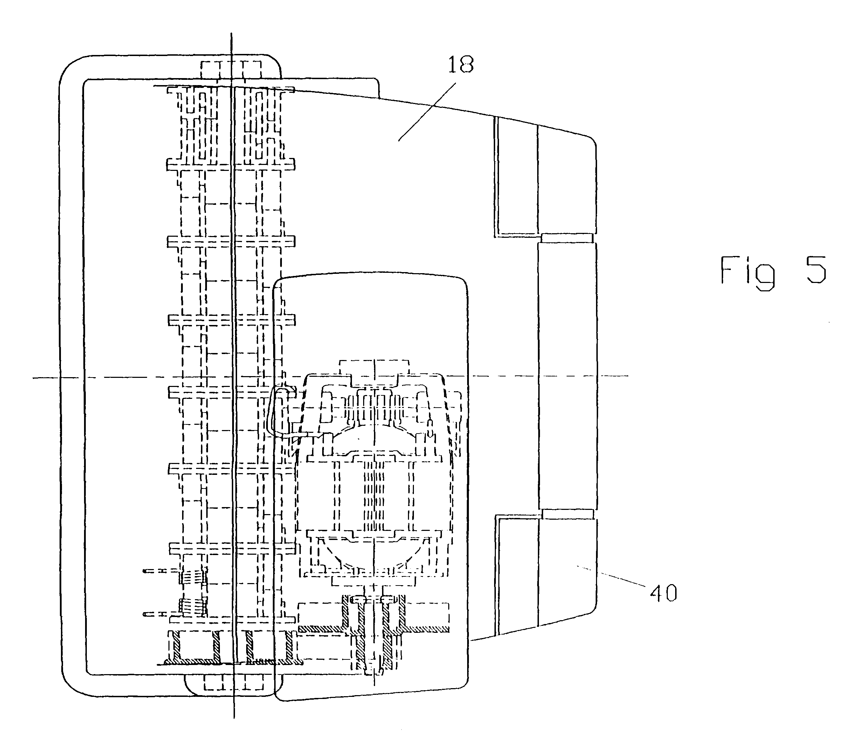

Fig. 5 zeigt eine Draufsicht des Zusatzgerätes;
Fig. 6 zeigt in schematischer Darstellung eine Höhenverstellbarkeit des Zusatzgerätes gegenüber dem Rasenmäherchassis;
Fig. 7 zeigt eine abgewandelte Ausführungsform mit einem Schwenkgelenk zwischen Geräteeinsteckzapfen und Zusatzgerät in Arbeitsstellung;
Fig. 8 zeigt eine Ansicht gemäß Fig. 7 bei zurückgeschwenktem Zusatzgerät.

In der dargestellten Zeichnung ist der Rasenmäher nur in seinem, das Zusatzgerät aufnehmenden, Vorderabschnitt dargestellt. Der Rasenmäher weist ein Fahrgestell mit einem gehäuseartigen Chassis 10 und Laufrädern 12 auf. Ein nicht dargestellter Motor mit vertikaler Antriebswelle treibt einen innerhalb des Chassis umlaufenden, nicht dargestellten Messerbalken an. Der Rasenmäher kann durch Hand mittels eines Führungsbügels geführt und über diesen verschoben oder durch einen Fahrantrieb bewegt werden.

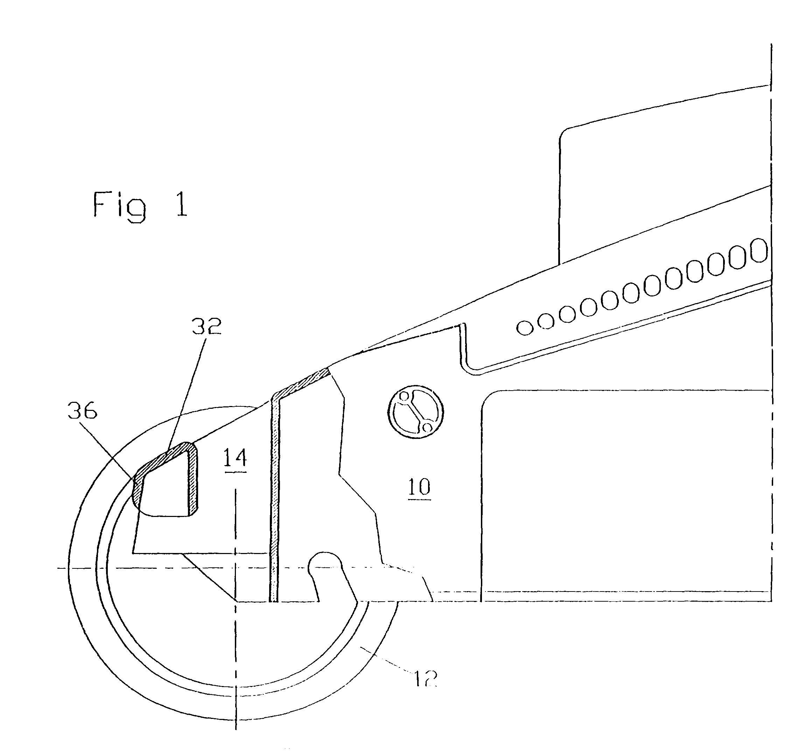

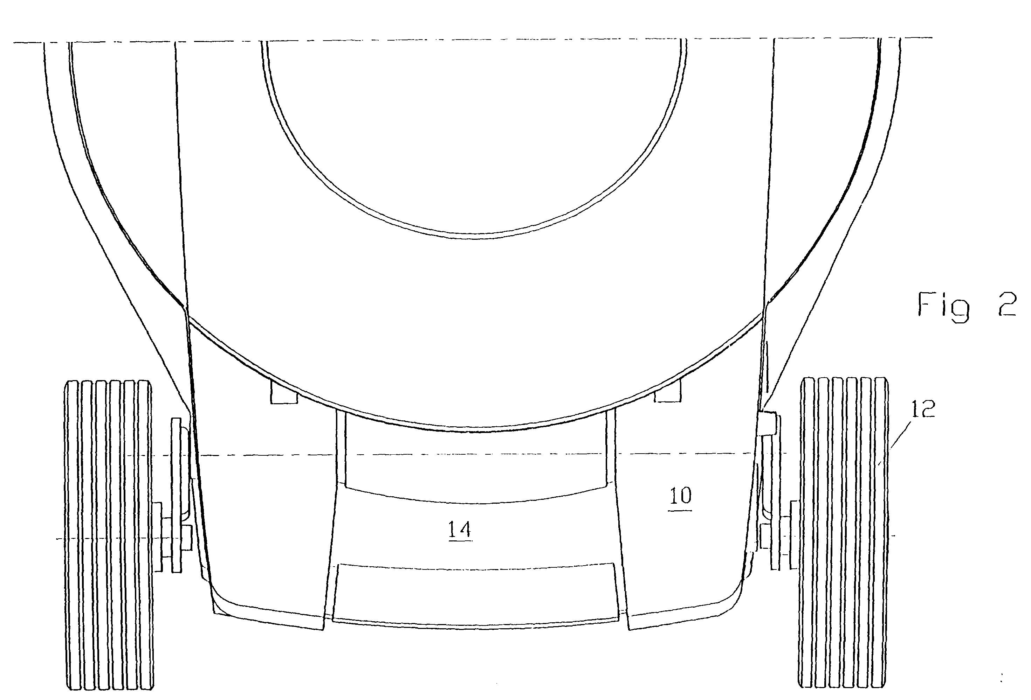

Gemäß dem dargestellten Ausführungsbeispiel weist das Chassis im Vorderabschnitt eine Grifföffnung 14 auf, die im Querschnitt aus Fig. 2 erkennbar ist und die gemäß Fig. 1 schachtartig mit vertikaler Achse ausgebildet ist. Diese Grifföffnung 14 dient zum Anheben des Chassis bei der Radverstellung und kann zum Aufhängen des Rasenmähers an einer geeigneten Haltevorrichtung benutzt werden.

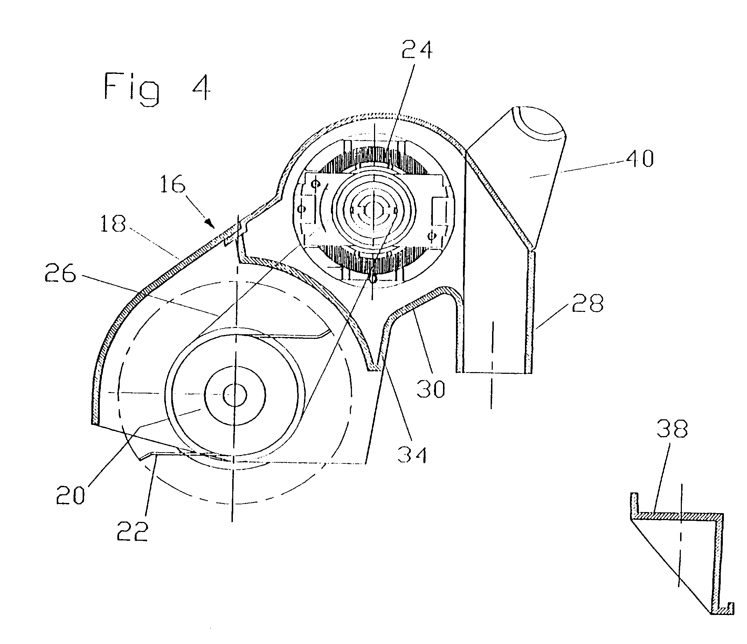

Gemäß Fig. 4 weist das als Lüfter ausgebildete Zusatzgerät ein Gehäuse 18 auf, das in einer unteren Gehäusekammer das Werkzeug, beispielsweise auf einer Lüfterwalze 20 angeordnete Federn 22, trägt. In der oberen Gehäusekammer des Gehäuses 18 ist ein Elektromotor 24 mit horizontaler Achse angeordnet. Dieser treibt über einen Keilriemen 26 die Lüfterwalze an. Das Gehäuse 18 weist einen hohlen Einsteckzapfen 28 auf, dessen Querschnitt dem Querschnitt der Grifföffnung 14 des Rasenmäherchassis entspricht. Im vorderen Abschnitt ist der Einsteckzapfen 28 weitergeführt zu einer schräg nach unten verlaufenden Auflagefläche 30, die der schräg verlaufenden Auflagefläche 32 des Chassis entspricht. Hieran schließt sich ein schräg nach unten verlaufender Abschnitt 34 des Gehäuses 18 an, der der Schürze 36 des Rasenmäherchassis angepaßt ist.

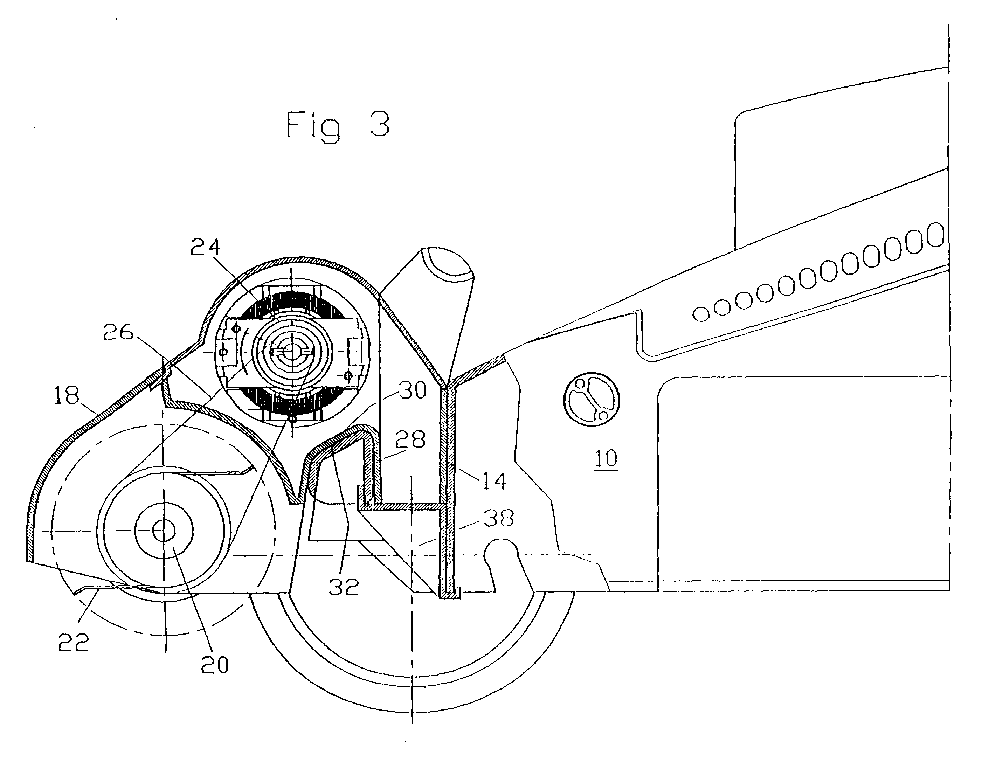

In eingestecktem Zustand (Fig. 3) liegen die Gehäuseteile einander an, so daß eine formschlüssige Abstützung von allen Seiten und von oben her erfolgt. Um ein unbeabsichtigtes Herausziehen des Gehäuses 18 aus dem Griffschacht zu vermeiden, kann eine Befestigungsklammer 38 in der aus Fig. 3 ersichtlichen Weise fixiert werden. Hierdurch wird ein Reibungsschluß zwischen Grifföffnung und Einsteckzapfen erreicht. Bei fabrikatorisch festgelegtem Zusatzgerät kann diese Klammer verschweißt sein. Bei einer demontierbaren Ausführung ist die Klammerverbindung zweckmäßigerweise z.B. durch eine per Knopfdruck entriegelbare Rastverbindung ersetzt.

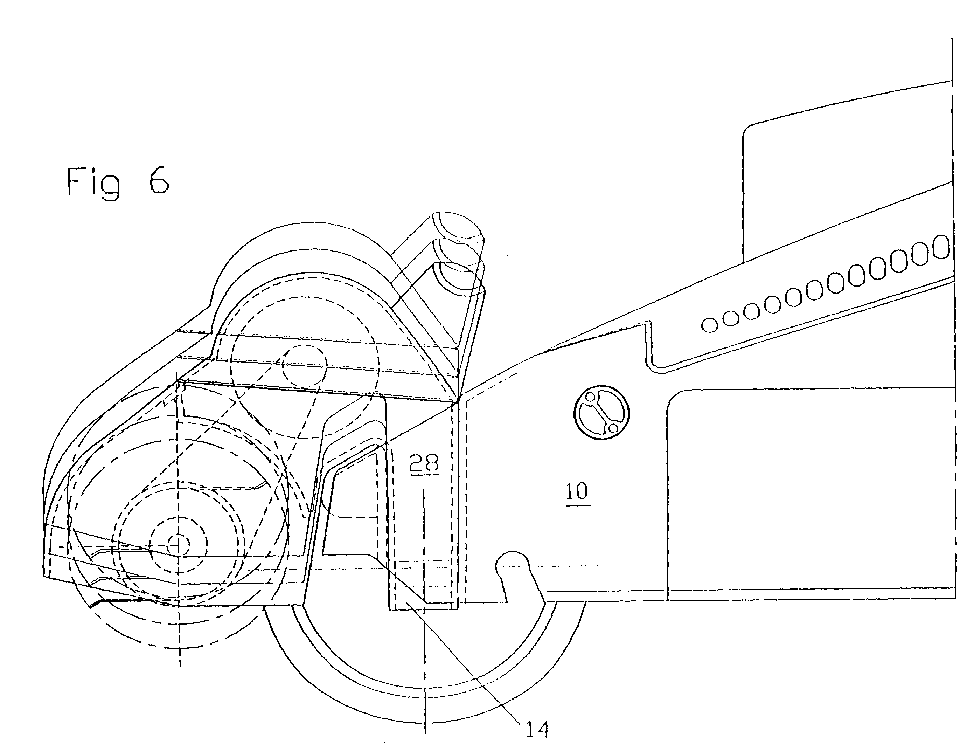

Die elektrische Verbindung zwischen Mäher und Zusatzgerät ist zweckmäßigerweise in Form einer lösbaren Steckverbindung ausgeführt. Ein entsprechend ausgebildeter Stecker ist zu diesem Zweck in einem oberen Gehäuseansatz 40 untergebracht. Fig. 6 zeigt eine schematische Darstellung der Höhenverstellbarkeit des Zusatzgerätes gegenüber dem Mäherchassis. Innerhalb des Grifföffnungsschachtes 14 ist der Einsteckzapfen 28 stufenweise oder kontinuierlich durch eine Klemmverbindung oder durch eine formschlüssige Verriegelung festlegbar.

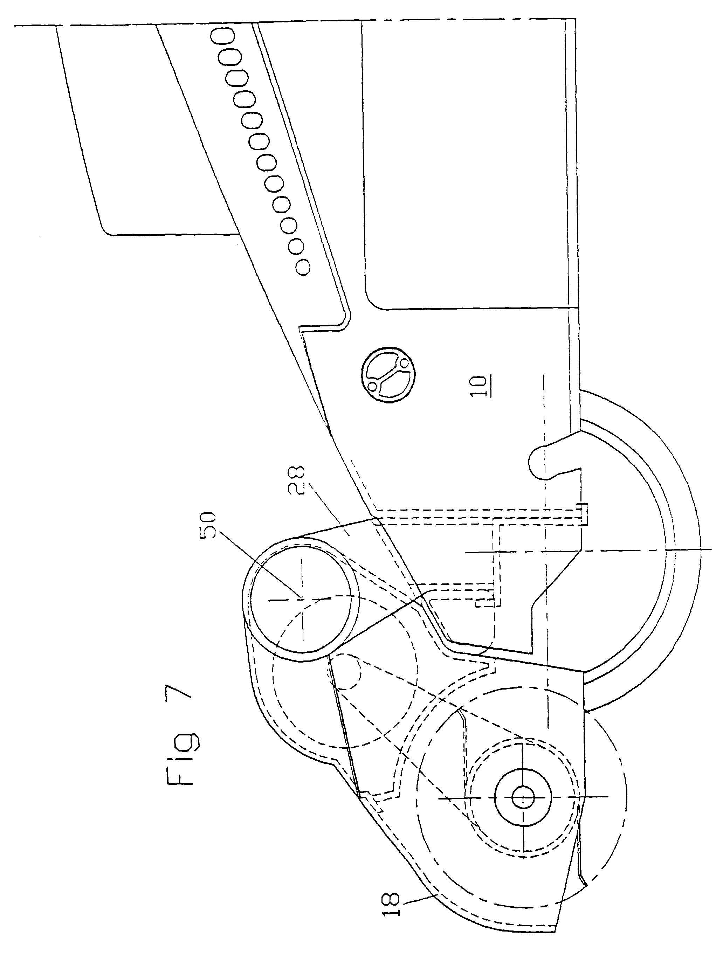

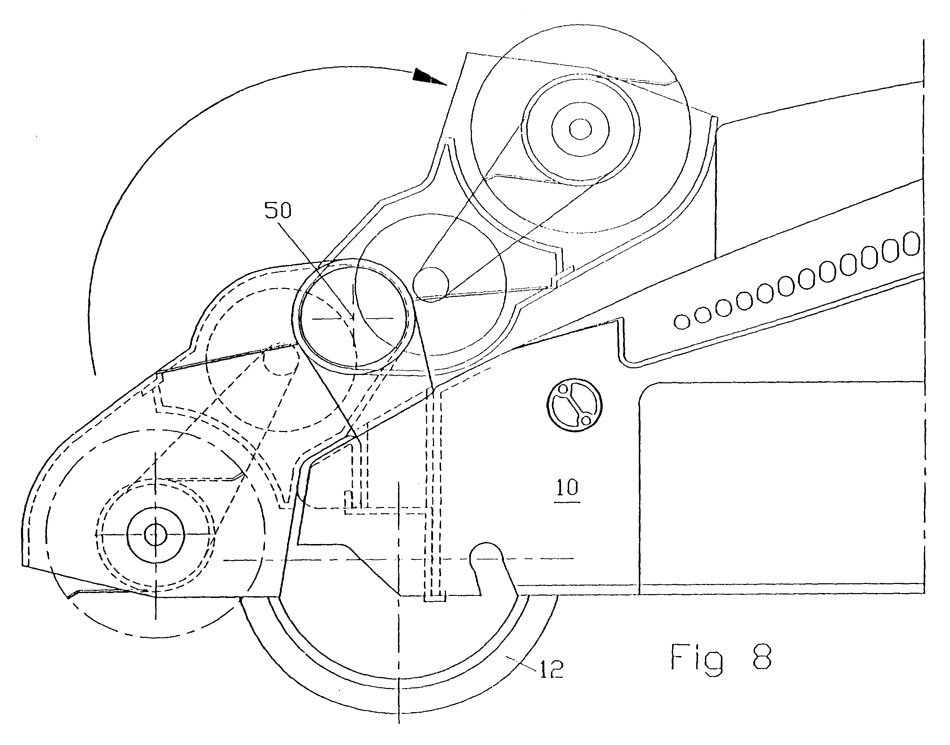

Bei der in den Fig. 7 und 8 dargestellten Ausführungsform, die vorzugsweise für festen Einbau bestimmt ist, ist das Gehäuse 18 des Zusatzgerätes vom Steckerteil 28 getrennt und mit diesem über ein Schwenkgelenk mit horizontaler Querachse 50 verbunden.

Dieses Schwenkgelenk ermöglicht eine Höheneinstellung, indem das Gehäuse 18 gegenüber dem Einsteckteil bzw. gegenüber dem Chassis 10 in verschiedenen Schwenkstellungen oder kontinuierlich festlegbar ist. Dies kann über formschlüssige Steckverbindungen oder Klemmverbindungen erreicht werden. Die Schwenkgelenkachse 50 ist derart angeordnet und ausgebildet, daß das Gehäuse 18 des Zusatzgerätes aus der aus Fig. 7 ersichtlichen Arbeitsstellung in die aus Fig. 8, ersichtliche Verstaustellung verschwenkt werden kann. In dieser Endlage der Schwenkbewegung reduziert sich der Mähergrundriß auf die Größe des Mähers ohne Vorsatzgerät.

Wie ersichtlich, kann das Zusatzgerät mit wenigen Handgriffen am Mäher montiert bzw. von diesem demontiert werden, ohne daß irgendwelche Sicherheitsvorkehrungen mechanischer oder elektrischer Art berücksichtigt werden müßten, die zu einer Gefahr für die Bedienungsperson Anlaß sein könnten.

### Bezugszeichenliste

- 10: Chassis
- 12: Laufräder
- 14: Grifföffnung
- 16: Zusatzgerät
- 18: Gehäuse
- 20: Lüfterwalze
- 22: Federn
- 24: Elektromotor
- 25: Keilriemen
- 28: Einsteckzapfen
- 30: Auflagefläche
- 32: Auflacefläche
- 34: Abschnitt
- 36: Schürze
- 38: Klammer
- 40: Gehäuseansatz
- 50: Querachse

## Patentansprüche

1. Rasenmäher mit den folgenden Merkmalen:
- ein Fahrgestell mit einem allseitig geschlossenen gehäuseförmigen Chassis (10) ist am Boden durch Laufräder (12) abgestützt;
- ein Mähwerk mit einem in einer Horizontalebene umlaufenden Messerbalken und einer diesen tragenden, motorisch angetriebenen Messerwelle ist innerhalb des Chassis (10) angeordnet;
- ein Bodenbearbeitungsgerät ist als Zusatzgerät (16) am Chassis (10) angebaut oder anbaubar;
- das Zusatzgerät (16) ist unabhängig vom Mähwerk motorisch antreibbar;
dadurch gekennzeichnet,
daß das Zusatzgerät (16) in einem gesonderten Gehäuse (18) untergebracht ist,
daß das Gehäuse (18) einen das Zusatzgerät antreibenden Motor (24) aufnimmt,
daß das Gehäuse (18) mit einer Stützfläche (30) am vorderen Chassisteil (32) abgestützt ist und
daß das Gehäuse (18) einen Steckzapfen (28) aufweist, der in eine Chassisausnehmung (14) einsteckbar und in dieser festlegbar ist.

2. Rasenmäher nach Anspruch 1,
dadurch gekennzeichnet, die Chassisausnehmung (14) schachtartig ausgebildet ist und daß der hohl ausgebildete Steckzapfen (28) im Querschnitt dem Querschnitt der Chassisöffnung entspricht.

3. Rasenmäher nach den Ansprüchen 1 und 2,
dadurch gekennzeichnet, daß die Chassisöffnung von einer bestehenden Grifföffnung (14) des Chassis (10) gebildet ist.

4. Rasenmäher nach den Ansprüchen 1 und 2,
dadurch gekennzeichnet, daß das Rasenmäherchassis mehrere Befestigungslöcher oder Befestigungshülsen aufweist, in denen das Gehäuse des Zusatzgerätes mit entsprechenden Steck- und Schraubbolzen festlegbar ist.

5. Rasenmäher nach einem der Ansprüche 1 bis 4,
dadurch gekennzeichnet, daß der Steckzapfen (28) durch eine Befestigungsvorrichtung (38) gegen Herausziehen aus der Grifföffnung (14) gesichert ist.

6. Rasenmäher nach Anspruch 5,
dadurch gekennzeichnet, daß die Befestigungsvorrichtung (38) als Fixierungsklammer ausgebildet ist.

7. Rasenmäher nach Anspruch 5,
dadurch gekennzeichnet, daß die Befestigungsvorrichtung eine lösbare Klemm- oder Verriegelungsvorrichtung ist.

8. Rasenmäher nach den Ansprüchen 1 bis 3,
dadurch gekennzeichnet, daß der Einsteckzapfen (28) in dem Grifföffnungsschacht (14) in unterschiedlichen Höhenlagen feststellbar und/oder verriegelbar ist.

9. Rasenmäher nach den Ansprüchen 1 bis 3,
dadurch gekennzeichnet, daß das Gehäuse (18) des Zusatzgerätes um eine horizontale Querachse (50) gegenüber dem Einsteckzapfen (28) verschwenkbar ist.

10. Rasenmäher nach Anspruch 9,
dadurch gekennzeichnet, daß das Gehäuse des Zusatzgerätes zwecks Höheneinstellung in unterschiedlichen Schwenkstellungen festlegbar ist.

11. Rasenmäher nach Anspruch 9,
dadurch gekennzeichnet, daß das Gehäuse des Zusatzgerätes über das Chassis einschwenkbar ist, um den Mähergrundriß auf die Größe des Mähers ohne Vorsatzgerät zu reduzieren.

12. Rasenmäher nach einem der Ansprüche 1 bis 11,
dadurch gekennzeichnet, daß der das Zusatzgerät antreibende Motor als Elektromotor (24) ausgebildet ist, der über eine Steckverbindung mit dem Netz bzw. dem Netzschalter verbindbar ist.

13. Rasenmäher nach einem der Ansprüche 1 bis 12,
dadurch gekennzeichnet, daß das Zusatzgerät als Lüfter mit Federn (22) ausgebildet ist.

14. Rasenmäher nach einem der Ansprüche 1 bis 13,
dadurch gekennzeichnet, daß das Zusatzgerät als Vertikutiergerät ausgebildet ist.

## Claims

1. Lawnmower having the following features:
- a frame having a chassis (10) in the shape of a casing closed on all sides is supported on the ground via running wheels (12);
- a cutting mechanism having a cutter bar rotating in a horizontal plane and a cutter shaft which carries said bar and is motor-powered is arranged inside the chassis (10);
- a ground working implement is attached or adapted to be attached as an attachment (16) to the chassis (10);
- the attachment (16) is adapted to be driven by a motor independently of the cutting mechanism;
characterised in that
the attachment (16) is housed in a separate casing (18),
the casing (18) takes a motor (24) which drives the attachment,
the casing (18) is supported on the front chassis portion (32) by a supporting surface (30) and
the casing (18) incorporates a plug-in pin (28) which is adapted to be pushed into a recess (14) in the chassis and to be located therein.

2. Lawnmower according to claim 1,
characterised in that the recess (14) in the chassis is configured like a shaft and that the cross-section of the hollow plug-in pin (28) matches the cross-section of the opening in the chassis.

3. Lawnmower according to claims 1 and 2,
characterised in that the opening in the chassis is constituted by an existing hand-hold opening (14) on the chassis (10).

4. Lawnmower according to claims 1 and 2,
characterised in that the lawnmower chassis incorporates a plurality of fixing holes or fixing sleeves in which the casing of the attachment is adapted to be located with suitable plug-in pins and screw bolts.

5. Lawnmower according to any of claims 1 to 4,
characterised in that the plug-in pin (28) is secured by a fixing device (38) to prevent it from being withdrawn from the hand-hold opening (14).

6. Lawnmower according to claim 5,
characterised in that the fixing device (38) is configured as a fixing clip.

7. Lawnmower according to claim 5,
characterised in that the fixing device is a removable clamping or locking arrangement.

8. Lawnmower according to claims 1 to 3,
characterised in that the insert pin (28) is adapted to be located and/or locked in the hand-hold opening shaft (14) at different elevational positions.

9. Lawnmower according to claims 1 to 3,
characterised in that the casing (18) of the attachment is adapted to be swivelled about a horizontal transverse axis (50) relative to the insert pin (28).

10. Lawnmower according to claim 9,
characterised in that the casing of the attachment is adapted to be located in different swivel settings for the purpose of height adjustment.

11. Lawnmower according to claim 9,
characterised in that the casing of the attachment is adapted to swivelled inwards over the chassis in order to reduce the floor area taken up by the mower to the size of the mower minus the attachment.

12. Lawnmower according to any of claims 1 to 11,
characterised in that the motor which drives the attachment is in the form of an electric motor (24) which is adapted to be connected via a plug connection to the mains supply, or mains supply switch.

13. Lawnmower according to any of claims 1 to 12,
characterised in that the attachment is in the form of an aerator with springs (22).

14. Lawnmower according to any of claims 1 to 13,
characterised in that the attachment is in the form of a spiking tool.

## Revendications

1. Tondeuse à gazon dotée des caractéristiques suivantes :
- un châssis, muni d'un cadre (10) en forme de carter fermé sur tous les côtés, prend appui par son fond sur des roues de roulement (12) ;
- un mécanisme de coupe, comprenant une barre porte-lame tournant dans un plan horizontal et un arbre porte-lame entraîné par moteur, et portant ladite barre, est logé à l'intérieur du cadre (10) ;
- un appareillage de travail du sol est ou peut être rapporté sur le cadre (10), en tant qu'appareillage additionnel (16) ;
- l'appareillage additionnel (16) peut être entraîné par moteur indépendamment du mécanisme de coupe ;
caractérisée par le fait
que l'appareillage additionnel (16) est logé dans un carter distinct (18) ;
que ledit carter (18) reçoit un moteur (24) entraînant l'appareillage additionnel ;
que le carter (18) prend appui, par une surface d'appui (30), sur la partie antérieure (32) du cadre ; et
que ledit carter (18) présente un tenon emboîtable (28) qui peut être emboîté dans un évidement (14) du cadre, et peut être arrêté dans ledit évidement.

2. Tondeuse à gazon selon la revendication 1,
caractérisée par le fait que l'évidement (14) du cadre est réalisé à la manière d'une cuvette ; et par le fait que le tenon emboîtable (28), de réalisation creuse, possède une section transversale correspondant à la section transversale de l'ouverture du cadre.

3. Tondeuse à gazon selon les revendications 1 et 2, caractérisée par le fait que l'ouverture du cadre est formée par une ouverture de préhension (14) existant dans ledit cadre (10).

4. Tondeuse à gazon selon les revendications 1 et 2,
caractérisée par le fait que le cadre de ladite tondeuse à gazon présente plusieurs trous de fixation ou douilles de fixation, dans lesquel(le)s le carter de l'appareillage additionnel peut être arrêté par des goupilles emboîtables et des boulons correspondants.

5. Tondeuse à gazon selon l'une des revendications 1 à 4,
caractérisée par le fait qu'une extraction du tenon emboîtable (28), hors de l'ouverture de préhension (14), est empêchée à l'aide d'un dispositif de fixation (38).

6. Tondeuse à gazon selon la revendication 5,
caractérisée par le fait que le dispositif de fixation (38) est réalisé sous la forme d'une agrafe de blocage.

7. Tondeuse à gazon selon la revendication 5,
caractérisée par le fait que le dispositif de fixation est un dispositif de coincement ou de verrouillage libérable.

8. Tondeuse à gazon selon les revendications 1 à 3,
caractérisée par le fait que le tenon emboîtable (28) peut être arrêté et/ou verrouillé dans la cuvette (14) de l'ouverture de préhension, dans des positions en hauteur différentes.

9. Tondeuse à gazon selon les revendications 1 à 3,
caractérisée par le fait que le carter (18) de l'appareillage additionnel peut être animé d'un pivotement vis-à-vis du tenon emboîtable (28), autour d'un axe transversal horizontal (50).

10. Tondeuse à gazon selon la revendication 9,
caractérisée par le fait que le carter de l'appareillage additionnel peut être arrêté dans différentes positions prises par pivotement, en vue d'un réglage en hauteur.

11. Tondeuse à gazon selon la revendication 9,
caractérisée par le fait que le carter de l'appareillage additionnel peut être rentré par pivotement, au-dessus du cadre, afin de réduire la configuration de base de la tondeuse à la taille de ladite tondeuse sans appareillage rapporté.

12. Tondeuse à gazon selon l'une des revendications 1 à 11,
caractérisée par le fait que le moteur entraînant l'appareillage additionnel est réalisé sous la forme d'un moteur électrique (24) pouvant être respectivement raccordé, par l'intermédiaire d'une liaison emboîtable, au réseau ou à l'interrupteur du réseau.

13. Tondeuse à gazon selon l'une des revendications 1 à 12,
caractérisée par le fait que l'appareillage additionnel est réalisé sous la forme d'un aérateur muni de ressorts (22).

14. Tondeuse à gazon selon l'une des revendications 1 à 13,
caractérisée par le fait que l'appareillage additionnel est réalisé sous la forme d'un scarificateur.
